# EUROPEAN PATENT SPECIFICATION

(11) **EP 2 921 983 B1**
(45) Date of publication and mention of the grant of the patent: **29.08.2018**
(21) Application number: 14001033.1
(22) Date of filing: 20.03.2014
(51) Int. Cl.: G06F 21/31

(54) **Login method with verification of password inadvertently inputted in username field**
Login-Verfahren mit Verifizierung des unabsichtlig eingegebenen Kennworts in das Benutzernamenfeld
Procédé de connexion avec vérification de mot de passe saisi par inadvertance dans le champ nom d'utilisateur

(43) Date of publication of application: 23.09.2015
(73) Proprietor: Unify GmbH & Co. KG, 80807 München (DE)
(72) Inventor: Lampros, Pappas, 14121 Neo Iraklio (GR)
(74) Representative: Fritzsche, Thomas

(56) References cited:
- JP-A- 2002 342 287
- US-A1- 2012 304 302

## Description

The invention relates to a method for initiating a login of a user into a system, the login being passed by inputting a username into a username field, inputting a password into a password field, and verifying that the inputted username is stored by the system and that the inputted password is a stored password corresponding to the inputted username.

One of the most common authentication methods in modern applications or communication systems is a login form usually comprising a username field, a password field and a login button. In most login forms the characters of the password field are hidden during user input in order to prevent password revealing from a possible malicious person overlooking the login form. Furthermore, there are auto-fill features provided in various login forms, whereby username and/or password fields are filled automatically during user input.

In case the user enters the username characters, neglects selecting the password field and continues to enter the password characters in the username field, the user leaves his password unprotected and exposed to a possibly overlooking person. Apart from the fact that the user fails to login properly, the password characters are revealed as plain text for a period of time raising a possible security breach. The known password protection technique is compromised if the user accidentally enters the password characters in the username field.

A method of password protection is known from US 2012/0304302 A1. The method includes not presenting or replacing by a blinking '?' characters or character sets entered in the username field of a login page if those characters match the first or leading character(s) of known passwords. If further inputted characters or character sets do not match a known password, the hitherto hidden or masked characters will be presented slowly, one character at a time, so as to help make it appear that the reason for the characters were not presented was due to a slow system. If a character set matches at least a leading portion of a password, a pop up box or other method may be used to query the user about the characters being entered such as "Are you sure you are entering the username?"

It is the object of the invention to automatically detect and to prevent accidental revealing of password characters into the username field when login of a user is initiated while enhancing a username learning service.

This object is achieved, in accordance with the invention, by a method according to claim 1 and by a system according to claim 10. By fact that the system verifies an input of characters into the username field whether the input of characters is password stored by the system and generating an output to the user, if it is verified that the input of characters is equal to a stored password, any accidental revealing of password characters as plain text is detected and prevented. This functionality minimizes security issues during initiation of a user login. As the output generated by the system in case of a string of inputted username characters does correspond to a stored password and/or does not correspond to a stored username preferrably comprises the question whether the user intends to input a stored password into the password field or to input a new username into the username field, the method according to the invention provides an enhanced username learning service.

In a preferred embodiment of the invention the user is prevented from inputting another character into the username field as long as the output is presented to the user. In this way, an immediate inputting of password characters into the username field without selecting the password field is disabled and, thus, a high security level is implemented into the login mechanism.

Typically, the input of characters is inputted by typing or by copying and pasting. Furthermore, the input of characters can be inputted in the username field character by character.

In a highly preferred embodiment of the invention, the system verifies each time a character is inputted into the username field whether the input of characters is part of a username stored by the system. By verifying each string of inputted characters with respect to a match with a stored username an accidental input of any, even a single, non-username character is detectable and therefore preventable.

A higher security level of the login mechanism is achieved by a preferred embodiment wherein the characters of an input of characters in the password field are presented hidden during user input.

The security level of the login mechanism is also increased by another preferred embodiment wherein the input of characters has to be inputted into the username field before it is possible to input an input of characters into the password field.

A high-comfortable username learning service is provided by an embodiment of the invention wherein the new username is stored by the system for future use.

A secure and user-friendly login service is provided by an embodiment of the invention wherein in case of match of the string of already inputted username characters with a stored username the system requests the user to input the corresponding password into the password field.

In a preferred embodiment of the invention an output of the system is generated when the user presses a login button and/or when the login is successful. This allows an immediate feedback to the user in case login is finished and successful, respectively.

Also within the scope of the invention is a system, comprising a username field for input of a username, a password field for input of a password, a storage unit for storing of usernames and corresponding passwords, a login unit for verification of inputted username and password in comparison with stored usernames and corresponding passwords, the system being able to verify an input of characters into the username field whether the input of characters is password stored by the system and to generate an output to the user, if it is verified that the input of characters is equal to a stored password.

In a preferred embodiment of the system the username field and the password field are integrated into an interface, like a display or a touch screen.

The invention further comprises an electronic device, in particular a smartphone or a tablet, with a system according to the invention.

Further features and advantages of the invention are disclosed by the enclosed drawing and the corresponding description. The features mentioned above and below can be used in accordance with the invention either individually or collectively in any combination. The embodiments mentioned are not to be understood as exhaustive enumeration but rather have exemplary character for the description of the invention.

### Drawing

- Fig. 1: shows a block diagram of a known method for initiating a login of a user into a system; and
- Fig. 2: shows a block diagram of a method for initiating a login of a user into a system according to the invention.

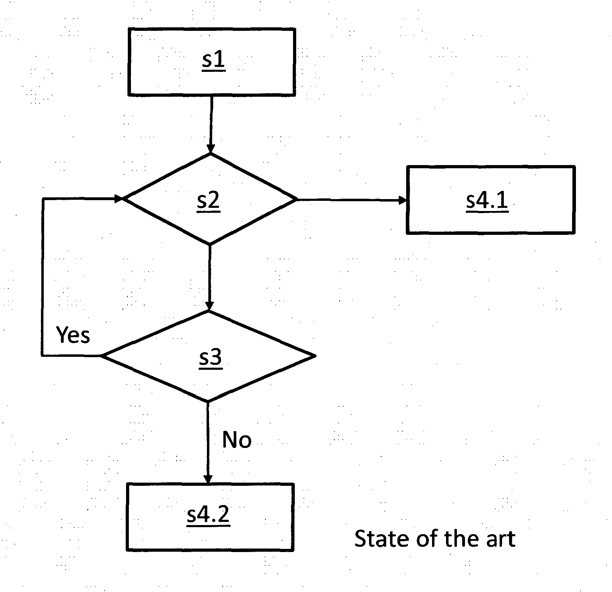

Fig. 1 illustrates a method known from state of the art for initiating a login of a user into a system. In a first step s1 a username field is selected by a user. In a second step s2 the user enters one or more username characters, i.e. a string of characters, into the username field. In a third step s3 the system verifies whether the string of characters corresponds to a username stored by the system. As long as the verification result is YES and the user input goes on, steps s2 and s3 are repeated. Having finished his input the user leaves the username field and a fourth step s4.1 succeeds step s2. In step s4.1 the user continues filling a password field and pressing a login button.

In case the verification result is NO and the user input goes on, another fourth step s4.2 succeeds step s3. In step 4.2 password characters are accidentally revealed due to the fact that the user accidentally neglects selecting the password field and starts entering password characters in the username field as plain text.

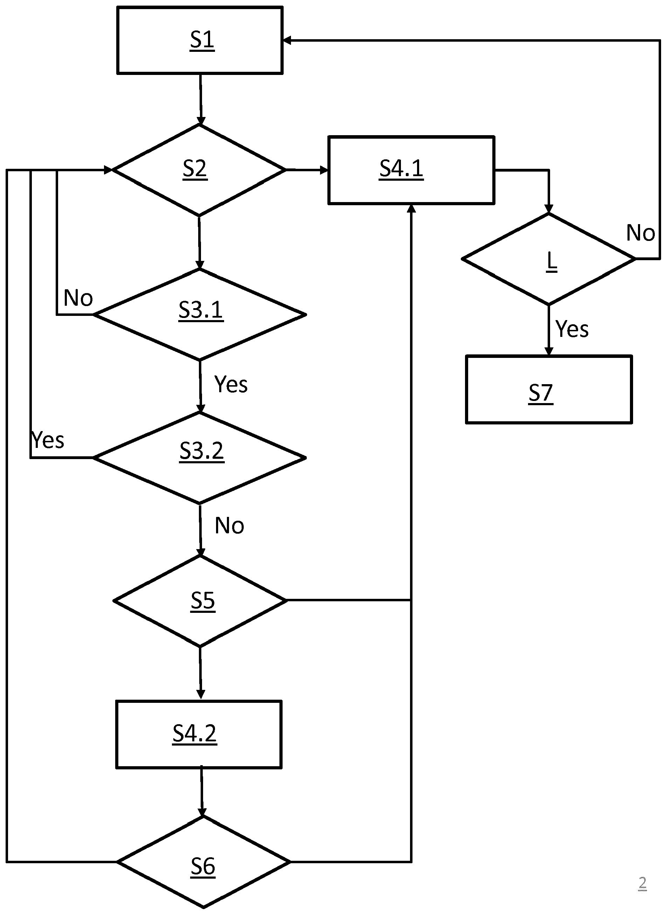

The security mechanism according to the invention is illustrated by Fig. 2. The illustration of Fig. 2 differs from the illustration of Fig. 1 in that the third step is split into step S3.1 comprising the verification whether the string of username characters fully match a stored username and step S3.2 comprising the verification whether the string of username characters is prefix of another stored username. As long as the verification result is NO for step S3.1 and YES for step S3.2 the user input goes on, steps S2, S3.1 and S3.3 are repeated. Having finished his input the user leaves the username field and Step S4.1 succeeds step S2 and S5, respectively.

In case the verification result is NO for S3.2 and the user input in step S5 succeeding step S3.2 goes on, i.e. the user enters at least one more character in the username field, the system in step S4.2 succeeding step S5 prompts to the user that password field is to be selected. The user is immediately made aware of his accidental input and password characters are never revealed as plain text in the username field in case the user neglects to select the password field properly. In step S6 succeeding step S4.2 the user has the option either to continue input at username field according to step S2 or to continue input at password field according to step S4.1.

In step S4.1 the user continues filling a password field and pressing a login button. In case the login is not successful in step L the user is brought back to the beginning of initiating the login according to step S1. In case the login L is successful, the used username is stored in step S7 in case the login has been performed with a new username.

## Claims

1. A method for initiating a login of a user into a system, the login (L) being passed by:
- inputting a username into a username field (S2),
- inputting a password into a password field (S4.1), and
- verifying that the inputted username is stored by the system (S3.1, S3.2) and that the inputted password is a stored password corresponding to the inputted username (L),
the method comprising
- the system verifying each time a character is inputted into the username field whether the input of characters is part of a username stored by the system and
- generating an output to the user, if it is verified that the input of characters is not equal to one of the stored username (S4.2),
**characterized in that**,
- the user is prevented from inputting another character into the user name field as long as the output is presented to the user wherein
- the output generated by the system in case of a string of inputted username characters not matching part of a stored username comprises the question whether the user intends to input a password into the password field or to input a new username into the username field (S6).

2. The method according to claim 1 or 2, wherein the input of characters is inputted by typing or by copying and pasting.

3. The method according to any of claims 1 to 2, wherein the input of characters is inputted in the username field character by character.

4. The method according to claim 3, wherein the system verfies each time a character is inputted into the username field whether the input of characters is a part of a username stored by the system.

5. The method according to any of the preceding claims, wherein the characters of an input of characters in the password field are presented hidden during user input.

6. The method according to any of the preceding claims, wherein the input of characters has to be inputted into the username field before it is possible to input an input of characters into the password field.

7. The method according to claim 6, wherein the new username is stored by the system for future use (S7).

8. The method according to any of the preceding claims, wherein in case of match of the string of already inputted username characters with a stored username the system requests the user to input the corresponding password into the password field (S4.2).

9. The method according to any of the preceding claims, wherein an output of the system is generated when the user presses a login button (S4.1) and/or when the login is passed/successful (L).

10. A system, comprising:
- a username field for input of a username,
- a password field for input of a password,
- a storage unit for storing of usernames,
- a login unit for verification of inputted username and password in comparison with stored usernames and corresponding passwords,
the system being configured
- to verify each time a character is inputted into the username field whether the input of characters is part of a username stored by the system
and
- to generate an output to the user, if it is verified that the input of characters is not equal to one of the stored username,
**characterized in that**,
- the user is prevented from inputting another character into the user name field as long as the output is presented to the user wherein
- the system being further configured such that the output generated in case of a string of inputted username characters not matching part of a stored username comprises the question whether the user intends to input a password into the password field or to input a new username into the username field.

11. The system according to claim 10, wherein the username field and the password field are integrated into an interface, like a display or a touch screen.

12. An electronic device, in particular a smartphone or a tablet, with a system according to claim 10 or 11.

## Patentansprüche

1. Verfahren zum Initiieren eines Logins eines Benutzers in ein System, wobei das Log-in (L) absolviert wird durch:
- Eingeben eines Benutzernamens in ein Benutzernamenfeld (S2)
- Eingeben eines Kennworts in ein Kennwortnamenfeld (S4.1), und
- Verifizieren, dass der eingegebene Benutzername von dem System gespeichert ist (S3.1, S3.2) und dass das eingegebene Kennwort ein gespeichertes Kennwort ist, das zu dem eingegebenen Benutzernamen gehört (L),
wobei das Verfahren Folgendes umfasst:
- Verifizieren durch das System jedes Mal, wenn ein Zeichen in das Benutzernamenfeld eingegeben wird, ob die Eingabe von Zeichen Teil eines von dem System gespeicherten Benutzernamens ist, und
- Erzeugen einer Ausgabe an den Benutzer, falls verifiziert wird, dass die Eingabe von Zeichen nicht einem des gespeicherten Benutzernamens entspricht (S4.2),
**dadurch gekennzeichnet, dass**
- der Benutzer daran gehindert wird, ein weiteres Zeichen in das Benutzernamenfeld einzugeben, solange die Ausgabe dem Benutzer bereitgestellt wird, wobei
- die von einem System erzeugte Ausgabe, falls eine Zeichenfolge eingegebener Benutzernamenzeichen, die nicht mit einem Teil eines gespeicherten Benutzernamens übereinstimmt, die Frage umfasst, ob der Benutzer beabsichtigt, ein Kennwort in das Kennwortfeld einzugeben oder einen neuen Benutzernamen in das Benutzernamenfeld einzugeben (S6).

2. Verfahren nach Anspruch 1 oder 2, wobei die Eingabe von Zeichen durch Eintippen oder Kopieren und Einfügen eingegeben wird.

3. Verfahren nach einem der Ansprüche 1 bis 2, wobei die Eingabe von Zeichen in das Benutzernamenfeld Zeichen für Zeichen eingegeben wird.

4. Verfahren nach Anspruch 3, wobei das System jedes Mal, wenn ein Zeichen in das Benutzernamenfeld eingegeben wird, verifiziert, ob die Eingabe von Zeichen ein Teil eines vom System gespeicherten Kennworts ist.

5. Verfahren nach einem der vorangehenden Ansprüche, wobei die Zeichen einer Eingabe von Zeichen in das Kennwortfeld während der Benutzereingabe verdeckt bereitgestellt werden.

6. Verfahren nach einem der vorangehenden Ansprüche, wobei die Eingabe von Zeichen in das Benutzernamenfeld eingegeben werden muss, bevor es möglich ist, eine Eingabe von Zeichen in das Kennwortfeld einzugeben.

7. Verfahren nach Anspruch 6, wobei der neue Benutzername von dem System für zukünftige Verwendung gespeichert wird (S7).

8. Verfahren nach einem der vorangehenden Ansprüche, wobei im Falle der Übereinstimmung der Zeichenfolge bereits eingegebener Benutzernamenzeichen mit einem gespeicherten Benutzernamen das System den Benutzer auffordert, das zugehörige Kennwort in das Kennwortfeld einzugeben (S4.2).

9. Verfahren nach einem der vorangehenden Ansprüche, wobei eine Ausgabe des Systems erzeugt wird, wenn der Benutzer eine Login-Schaltfläche betätigt (S4.1) und/oder wenn das Login absolviert/erfolgreich ist (L).

10. System, Folgendes umfassend:
- ein Benutzernamenfeld zur Eingabe eines Benutzernamens,
- ein Kennwortfeld zur Eingabe eines Kennworts,
- eine Speichereinheit zum Speichern eines Benutzernamens,
- eine Login-Einheit zur Verifizierung eines eingegebenen Benutzernamens und Kennworts im Vergleich zu gespeicherten Benutzernamen und zugehörigen Kennwörtern,
wobei das System konfiguriert ist, um:
- jedes Mal, wenn ein Zeichen in das Benutzernamenfeld eingegeben wird, zu verifizieren, ob die Eingabe von Zeichen Teil eines von dem System gespeicherten Benutzernamens ist, und
- eine Ausgabe an den Benutzer zu erzeugen, falls verifiziert wird, dass die Eingabe von Zeichen nicht einem des gespeicherten Benutzernamens entspricht,
**gekennzeichnet dadurch, dass**
- der Benutzer daran gehindert wird, ein weiteres Zeichen in das Benutzernamenfeld einzugeben, solange die Ausgabe dem Benutzer bereitgestellt wird, wobei
- das System ferner derart konfiguriert ist, dass die Ausgabe, die erzeugt wird, falls eine Zeichenfolge eingegebener Benutzernamenzeichen, die nicht mit einem Teil eines gespeicherten Benutzernamens übereinstimmt, die Frage umfasst, ob der Benutzer beabsichtigt, ein Kennwort in das Kennwortfeld einzugeben oder einen neuen Benutzernamen in das Benutzernamenfeld einzugeben.

11. System nach Anspruch 10, wobei das Benutzernamenfeld und das Kennwortfeld in eine Oberfläche integriert sind, wie zum Beispiel ein Display oder einen Touchscreen.

12. Elektronische Vorrichtung, insbesondere ein Smartphone oder Tablet, mit einem System nach Anspruch 10 oder 11.

## Revendications

1. Procédé d'initiation d'une connexion d'un utilisateur dans un système, la connexion (L) étant réussie :
- en saisissant un nom d'utilisateur dans un champ de nom d'utilisateur (S2),
- en saisissant un mot de passe dans un champ de mot de passe (S4.1), et
- en vérifiant que le nom d'utilisateur saisi est bien mémorisé par le système (S3.1, S3.2) et que le mot de passe saisi est bien un mot de passe mémorisé correspondant au nom d'utilisateur saisi (L),
le procédé comprenant :
- le système vérifiant à chaque fois qu'un caractère est saisi dans le champ du nom d'utilisateur si la saisie des caractères fait partie d'un nom d'utilisateur mémorisé par le système et
- générant une sortie à l'utilisateur, s'il a été vérifié que la saisie de caractères n'est pas égale à une saisie de nom d'utilisateur mémorisé (S4.2),
**caractérisé en ce que**
- l'utilisateur est empêché de saisir un autre caractère dans le champ du nom d'utilisateur tant que la sortie est présentée à l'utilisateur
- la sortie générée par le système, dans le cas d'une chaîne de caractères de nom d'utilisateur saisis ne correspondant pas à une partie d'un nom d'utilisateur mémorisé, comprenant la question de savoir si l'utilisateur a l'intention de saisir un mot de passe dans le champ de mot de passe ou de saisir un nouveau nom d'utilisateur dans le champ de nom d'utilisateur (S6) .

2. Procédé selon la revendication 1 ou 2, dans lequel la saisie de caractères est saisie en tapant ou en copiant et en collant.

3. Procédé selon l'une quelconque des revendications 1 à 2, dans lequel la saisie de caractères est saisie dans le champ de nom d'utilisateur caractère par caractère.

4. Procédé selon la revendication 3, dans lequel le système vérifie à chaque fois qu'un caractère est saisi dans le champ du nom d'utilisateur si la saisie de caractères fait partie d'un nom d'utilisateur mémorisé par le système.

5. Procédé selon l'une quelconque des revendications précédentes, dans lequel les caractères d'une saisie de caractères dans le champ du mot de passe sont présentés comme cachés pendant la saisie utilisateur.

6. Procédé selon l'une quelconque des revendications précédentes, dans lequel la saisie de caractères doit être saisie dans le champ de nom d'utilisateur avant qu'il ne soit possible de saisir une saisie de caractères dans le champ de mot de passe.

7. Procédé selon la revendication 6, dans lequel le nouveau nom d'utilisateur est mémorisé par le système pour une utilisation future (S7).

8. Procédé selon l'une quelconque des revendications précédentes, dans lequel, dans le cas d'une correspondance entre la chaîne de caractères de nom d'utilisateur déjà saisis et un nom d'utilisateur mémorisé, le système demande à l'utilisateur de saisir le mot de passe correspondant dans le champ de mot de passe (S4.2).

9. Procédé selon l'une quelconque des revendications précédentes, dans lequel une sortie du système est générée lorsque l'utilisateur appuie sur un bouton de connexion (S4.1) et/ou lorsque la connexion est réussie/a abouti (L).

10. Système comprenant :
- un champ de nom d'utilisateur pour la saisie d'un nom d'utilisateur,
- un champ de mot de passe pour la saisie d'un mot de passe,
- une unité de mémoire pour la mise en mémoire de noms d'utilisateurs,
- une unité de connexion pour la vérification d'un nom d'utilisateur et d'un mot de passe saisis en comparaison avec les noms d'utilisateurs et les mots de passe correspondants mémorisés,
le système étant configuré
- pour vérifier à chaque fois qu'un caractère est saisi dans le champ du nom d'utilisateur si la saisie des caractères fait partie d'un nom d'utilisateur mémorisé par le système
et
- pour générer une sortie à l'utilisateur, s'il a été vérifié que la saisie de caractères n'est pas égale à une saisie de nom d'utilisateur mémorisé,
**caractérisé en ce que**
- l'utilisateur est empêché de saisir un autre caractère dans le champ du nom d'utilisateur tant que la sortie est présentée à l'utilisateur
- le système étant en outre configuré de telle sorte que la sortie générée, dans le cas d'une chaîne de caractères de nom d'utilisateur saisis ne correspondant pas à une partie d'un nom d'utilisateur mémorisé, comprend la question de savoir si l'utilisateur a l'intention de saisir un mot de passe dans le champ de mot de passe ou de saisir un nouveau nom d'utilisateur dans le champ de nom d'utilisateur.

11. Système selon la revendication 10, dans lequel le champ de nom d'utilisateur et le champ de mot de passe sont intégrés dans une interface, comme un écran d'affichage ou un écran tactile.

12. Dispositif électronique, en particulier un téléphone intelligent ou une tablette électronique, comprenant un système selon la revendication 10 ou 11.
